# EUROPÄISCHE PATENTSCHRIFT

(11) **EP 4 169 618 B1**
(45) Veröffentlichungstag und Bekanntmachung des Hinweises auf die Patenterteilung: **22.05.2024**
(21) Anmeldenummer: 22202088.5
(22) Anmeldetag: 18.10.2022
(51) Int. Cl.: B01L 9/06, G01N 35/02, B01J 3/03, G01N 35/04

(54) **PROBENBEHÄLTERHANDHABUNGSSYSTEM**
SPECIMEN CONTAINER HANDLING SYSTEM
SYSTÈME DE MANIPULATION DE RÉCIPIENT D'ÉCHANTILLON

(30) Priorität: 20.10.2021 DE 202021105714 U
(43) Veröffentlichungstag der Anmeldung: 26.04.2023
(73) Patentinhaber: MLS Mikrowellen-Labor-Systeme GmbH, 88299 Leutkirch (DE)
(72) Erfinder: Werner, LAUTENSCHLÄGER, 88299 Leutkirch (DE)
(74) Vertreter: Kiwit, Benedikt

(56) Entgegenhaltungen:
- EP-A1- 3 783 366
- WO-A1-2021/048883
- WO-A1-2021/084849
- DE-U1-202016 101 637
- US-A1- 2013 263 622
- US-A1- 2019 388 931

## Beschreibung

Die Erfindung betrifft ein Probenbehälterhandhabungssystem und ein System mit einem derartigen Probenbehälterhandhabungssystem und einem Druckbehälter mit einer Reaktionskammer als Druckraum zum Auslösen und/oder Fördern chemischer und/oder physikalischer Druckreaktionen von in der Reaktionskammer aufgenommenen Proben.

Bei der Durchführung von Druckreaktionen an Proben ist eine Handhabung dieser Proben vor und/oder nach der jeweiligen Druckreaktion erforderlich. Die Proben sind dabei in mehreren Probenbehältern aufgenommen, wobei die Probenbehälter wiederum in einer Probenbehälteraufnahme gehalten sind. Die Probenbehälter sind in der Probenbehälteraufnahme dicht beieinanderliegen aufgenommen. Dadurch kann eine Reaktionskammer eines Druckbehälters mit besonders vielen Probenbehältern bestückt werden. Außerdem kann dadurch eine besonders große Anzahl an Probenbehältern gehandhabt werden. Die DE202016101637U1 offenbart ein Reaktionsbehältersystem aufweisend einen Reaktionsbehälter zur Aufnahme von Proben, und ein Rotorelement für Reaktionen, insbesondere für Druckreaktionen, mit einer Rotationsachse.

Ein Nachteil einer derartigen dicht beieinanderliegenden Anordnung ist die unzureichende Sicherheit bei der Handhabung der einzelnen Probenbehälter. Die einzelnen Probenbehälter sind oft mit gefährlichen oder schädigenden Proben wie beispielsweise Chemikalien oder Säuren befüllt. Durch den geringen Abstand zwischen benachbarten Probenbehältern besteht damit die Gefahr, dass bei der Handhabung der Probenbehälter ein unerwünschter Kontakt wie beispielsweise Hautkontakt mit der jeweiligen Probe erfolgt. Beispielsweise kann es sein, dass die Probe während der Handhabung des entsprechenden Probenbehälters aus diesem entweicht oder schwappt und daraufhin in unerwünschter Weise eine Oberfläche wie beispielsweise Haut physikalisch und/oder chemisch angreift. Folglich ist ein Nachteil der Probenbehälterhandhabung die unzureichende Sicherheit bzw. ein unzureichender Sicherheitsstandard.

Es ist somit eine Aufgabe der vorliegenden Erfindung, die Handhabung von Probenbehältern sicherer zu machen.

Diese Aufgabe wird durch die Gegenstände der unabhängigen Ansprüche gelöst.

Vorteilhafte Weiterbildungen sind Gegenstand der hierauf rückbezogenen Unteransprüche.

Gemäß einem ersten Aspekt betrifft die Erfindung ein Probenbehälterhandhabungssystem. Das Probenbehälterhandhabungssystem weist eine Probenbehälteraufnahme auf, die aufweist: Haltestrukturen, die jeweils zur Halterung eines jeweiligen Probenbehälters ausgebildet sind und die um eine Rotationsachse herum angeordnet sind, und einen Boden mit einem Auflagebereich zur Auflage der über die Haltestrukturen gehaltenen Probenbehälter, wobei der Boden ferner eine dem Auflagebereich abgewandte Seite und wenigstens eine Durchgangsöffnung aufweist, die sich von dieser Seite zu dem Auflagebereich erstreckt. Das Probenbehälterhandhabungssystem weist ferner ein Auflageelement auf, das mit dem Boden der Probenbehälteraufnahme verbindbar ist, um diese aufzunehmen, wobei das Auflageelement wenigstens einen Vorsprung aufweist, der, wenn das Auflageelement die Probenbehälteraufnahme aufnimmt, sich durch die wenigstens eine Durchgangsöffnung erstreckt und von dem Auflagebereich zum Anheben eines oder mehrerer Probenbehälter hervorsteht.

Es ist somit möglich, mit dem Probenbehälterhandhabungssystem zumindest einen Probenbehälter anzuheben und diesen daraufhin einfach aus der Probenbehälteraufnahme herauszunehmen. Denn der wenigstens eine Vorsprung bewirkt ein Anheben wenigstens eines Probenbehälters derart, dass neben diesem ein Freiraum geschaffen ist, über den der Probenbehälter einfach gegriffen und anschließend aus der Probenbehälteraufnahme entnommen werden kann. Der wenigstens eine Vorsprung bildet also eine Art Lift zur einfachen Entnahme eines oder mehrerer Probenbehälter. Anders gesagt wird durch das Anheben wenigstens eines Probenbehälters mittels des wenigstens einen Vorsprungs ein Raum neben dem so angehobenen (d.h. relativ zu benachbarten Probenbehältern vorstehenden oder überstehenden) Probenbehälter geschaffen, wobei in dem Raum ein zu dem angehobenen Probenbehälter benachbarter Probenbehälter nicht vorgesehen ist. Über diesen Raum oder Freiraum kann der entsprechend vorstehende (oder überstehende) Bereich des angehobenen Probenbehälters dann gegriffen oder angepackt und aus der Probenbehälteraufnahme entnommen werden.

Dadurch ist es nicht erforderlich, einen nur verhältnismäßig schmalen Raum oder Spalt zwischen dicht beieinanderliegenden Probenbehälter zu nutzen, um einen einzelnen Probenbehälter aus der Probenbehälteraufnahme zu entnehmen. Folglich ist die Sicherheit bei der Handhabung, insbesondere Entnahme der Probenbehälter verbessert. Dies auch insbesondere deshalb, da ein Bediener zum Anheben des wenigstens einen Probenbehälters diesen nicht direkt, beispielsweise mit seinen Fingern, anheben muss. Vielmehr kann allein durch Aufnahme der Probenbehälteraufnahme durch das Auflageelement ein (automatisches) Anheben eines oder mehrerer Probenbehälter mittels des wenigstens einen Vorsprungs bewirkt werden.

Die Probenbehälteraufnahme weist eine definierte (Gesamt-) Anzahl an Haltestrukturen zur Halterung einer entsprechenden Anzahl an Probenbehältern auf, wobei der wenigstens eine Vorsprung geeignet ist, in dem Zustand, wenn das Auflageelement die Probenbehälteraufnahme aufnimmt, nur eine Anzahl an Probenbehältern anzuheben, die kleiner ist als die definierte Anzahl an Haltestrukturen, sodass wenigstens ein Probenbehälter relativ zu seinem benachbarten Probenbehälter angehoben ist. Mit anderen Worten ist der wenigstens eine Vorsprung derart ausgebildet und/oder weist eine derartige Anzahl an Vorsprüngen auf, dass, wenn die maximal mögliche Anzahl an Probenbehältern durch die Haltestrukturen gehalten ist und das Auflageelement die Probenbehälteraufnahme aufnimmt, immer zumindest ein Probenbehälter auf dem Auflagebereich aufliegen bleibt oder, anders gesagt, durch den wenigstens einen Vorsprung nicht angehoben ist. Dadurch ist sichergestellt, dass durch die Anhebung eines oder mehrerer der Probenbehälters mittels des wenigstens einen Vorsprungs immer zumindest neben einem Probenbehälter einen Freiraum geschaffen ist, über den dann ein Probenbehälter einfach gegriffen und sodann entnommen werden kann.

Die Haltestrukturen können aufweisen: erste Haltestrukturen, die auf einem ersten gedachten, um die Rotationsachse verlaufenden Ring angeordnet sind, und zweite Haltestrukturen, die auf einem zweiten gedachten, um die Rotationsachse verlaufenden Ring angeordnet sind. Durch eine derartige Ausbildung der Haltestrukturen können besonders viele Probenbehälter in der Probenbehälteraufnahme dicht nebeneinander angeordnet werden. Somit kann beispielsweise der Durchsatz an Proben erhöht werden, während eine einfache und sichere Handhabung weiterhin durch Zusammenwirkung der Probenbehälteraufnahme mit dem Auflageelement gewährleistet ist. Die gedachten Ringe können jeweils unterschiedliche Formen aufweisen, beispielsweise eine kreisförmige, mehreckige, rechteckige oder quadratische Form. Bevorzugt ist, wenn die gedachten Ringe jeweils kreisförmig sind. Der Radius des zweiten gedachten Rings ist dann vorzugsweise kleiner als der des ersten gedachten Rings.

Die wenigstens eine Durchgangsöffnung kann aufweisen: wenigstens eine erste, dem ersten gedachten Ring entsprechend angeordnete und/oder ausgebildete Durchgangsöffnung und wenigstens eine zweite, dem zweiten gedachten Ring entsprechend angeordnete und/oder ausgebildete Durchgangsöffnung. Mit anderen Worten können, in Richtung der Rotationsachse gesehen, die ersten und zweiten Haltestrukturen und die wenigstens eine erste und wenigstens eine zweite Durchgangsöffnung zumindest teilweise deckungsgleich angeordnet sein. Dadurch ist es insbesondere möglich, jeden der Probenbehälter entlang einer Gerade, die einerseits durch eine erste (oder zweite) Durchgangsöffnung und andererseits durch eine erste (oder zweite) Haltestruktur führt, zu verschieben und folglich anzuheben. Ist die wenigstens eine erste Durchgangsöffnung entsprechend dem ersten gedachten Ring ausgebildet, kann diese ringsegmentförmig oder ringförmig ausgebildet sein, beispielsweise in Form eines Schlitzes. Ist die wenigstens eine zweite Durchgangsöffnung entsprechend dem zweiten gedachten Ring ausgebildet, kann diese ringsegmentförmig oder ringförmig ausgebildet sein, beispielsweise in Form eines Schlitzes.

Die wenigstens eine erste Durchgangsöffnung kann mehrere erste Durchgangsöffnungen aufweisen, die entsprechend dem ersten gedachten Ring angeordnet und/oder ausgebildet sind. Die Anzahl an ersten Durchgangsöffnungen entspricht dabei vorzugsweise der Anzahl an ersten Haltestrukturen. In einer anderen Ausführungsform kann die wenigstens eine erste Durchgangsöffnung auch (nur) eine einzelne erste Durchgangsöffnung sein, die entsprechend dem ersten gedachten Ring angeordnet und/oder ausgebildet ist. Somit kann beispielsweise die einzelne erste Durchgangsöffnung für mehrere oder alle erste Haltestrukturen vorgesehen sein.

Die wenigstens eine zweite Durchgangsöffnung kann mehrere zweite Durchgangsöffnungen aufweisen, die entsprechend dem zweiten gedachten Ring angeordnet und/oder ausgebildet sind. Die Anzahl an zweiten Durchgangsöffnungen entspricht dabei vorzugsweise der Anzahl an zweiten Haltestrukturen. In einer anderen Ausführungsform kann die wenigstens eine zweite Durchgangsöffnung (nur) eine einzelne zweite Durchgangsöffnung sein, die entsprechend dem zweiten gedachten Ring angeordnet und/oder ausgebildet ist. Somit kann beispielsweise die einzelne zweite Durchgangsöffnung für mehrere oder alle zweite Haltestrukturen vorgesehen sein.

Vorzugsweise weist der wenigstens eine Vorsprung auf: wenigstens einen ersten Vorsprung und wenigstens einen zweiten Vorsprung, die derart angeordnet sind, dass, wenn das Auflageelement die Probenbehälteraufnahme aufnimmt, der wenigstens zweite Vorsprung sich durch die wenigstens eine zweite Durchgangsöffnung zum Anheben wenigstens eines (zweiten) Probenbehälters erstreckt. Mit anderen Worten steht je gedachtem Ring wenigstens ein Probenbehälter hervor, wenn das Auflageelement die Probenbehälteraufnahme aufnimmt. Somit ergibt sich eine besonders sichere Handhabung von Probenbehältern.

In einer Ausführungsform kann die wenigstens eine Durchgangsöffnung eine einzelne Durchgangsöffnung sein, wobei der wenigstens eine Vorsprung ein einzelner Vorsprung ist, der derart angeordnet ist, dass, wenn das Auflageelement die Probenbehälteraufnahme aufnimmt, der Vorsprung sich durch die Durchgangsöffnung zum Anheben eines oder mehrerer Probenbehälter erstreckt. Mit anderen Worten kann für die mehreren Haltestrukturen bzw. mehreren Probenbehältern, die durch die Haltestrukturen gehalten werden können, nur eine einzige Durchgangsöffnung vorgesehen sein, über die ein Vorsprung des Auflageelements einen oder mehrere Probenbehälter anheben kann. Die Haltestrukturen bzw. die Probenbehälter sind dabei vorzugsweise entsprechend einem einzigen gedachten, um die Rotationsachse verlaufenden Ring angeordnet.

Das Auflageelement kann aufweisen: einen Boden, von dem sich der wenigstens eine Vorsprung erstreckt, und wenigstens eine Seitenwand, die sich von dem Boden erstreckt. Wenn das Auflageelement die Probenbehälteraufnahme aufnimmt, liegt die Probenbehälteraufnahme mit der abgewandten Seite ihres Bodens auf dem Boden des Auflageelements auf und die wenigstens eine Seitenwand umgibt den Boden der Probenbehälteraufnahme zumindest teilweise. Dadurch ist eine besonders sichere Aufnahme der Probenbehälteraufnahme durch das Auflageelement gewährleistet. Die wenigstens eine Seitenwand umgibt den Boden der Probenbehälteraufnahme vorzugsweise derart, dass die Probenbehälteraufnahme relativ zu dem wenigstens einen Vorsprung definiert ausgerichtet und/oder relativ zum Auflageelement zentriert ist. Dadurch wirken Probenbehälteraufnahme und Auflageelement bzw. dessen wenigstens eine Seitenwand derart zusammen, dass ein Ausrichten der wenigstens einen Durchgangsöffnung relativ zu dem wenigstens einen Vorsprung vereinfacht ist. Folglich ist die Handhabung des Probenbehälterhandhabungssystems vereinfacht.

Der Boden der Probenbehälteraufnahme kann eine Anlaufschräge zum Zusammenwirken mit dem Auflageelement, vorzugsweise mit dessen Seitenwand, und somit Ausrichten der Probenbehälteraufnahme relativ zum Auflageelement aufweisen. Dadurch ergibt sich eine einfache Handhabung. Alternativ oder zusätzlich kann das Auflageelement, vorzugsweise dessen Seitenwand, eine Anlaufschräge zum Zusammenwirken mit dem Boden der Probenbehälteraufnahme und somit Ausrichten der Probenbehälteraufnahme relativ zum Auflageelement aufweisen.

Der wenigstens eine Vorsprung kann lösbar vorgesehen, beispielsweise in den Boden des Auflageelements eingesteckt und/oder eingeschraubt sein. Dadurch kann der wenigstens eine Vorsprung einfach ausgetauscht und/oder gewartet werden.

Der wenigstens eine Vorsprung kann unlösbar vorgesehen sein, beispielsweise indem er integral mit dem Boden des Auflageelements ausgebildet ist. Der wenigstens eine Vorsprung und der Boden des Auflageelements können folglich aus einem Guss oder einteilig hergestellt sein. Somit kann der wenigstens eine Vorsprung einfach, insbesondere mit wenigen Herstellungsschritten bereitgestellt werden.

Der wenigstens eine Vorsprung ist nicht auf eine bestimmte Form beschränkt. Bevorzugt ist, wenn der wenigstens eine Vorsprung jeweils als Stift, Säule und/oder im Querschnitt kreisförmig ausgebildet ist, beispielsweise die Form eines Zylinders aufweist. Alternativ oder zusätzlich kann der wenigstens eine Vorsprung sich ringsegmentförmig oder ringförmig erstrecken, wobei die jeweilige Ringform vorzugsweise einem der gedachten Ringe bzw. dem entsprechenden gedachten Ring entspricht.

Die Probenbehälteraufnahme kann ein von deren Boden beabstandetes Halteelement aufweisen, wobei jede der Haltestrukturen zumindest teilweise in dem Halteelement ausgebildet ist. Dadurch kann die Probenbehälteraufnahme mehrere Probenbehälter mittels der zumindest teilweise in dem Halteelement ausgebildeten Haltestrukturen besonders gut halten, während beispielsweise weiterhin eine Verschiebung eines jeden Probenbehälters entlang einer Richtung parallel zur Rotationsachse möglich ist. Durch das Halteelement kann die Probenbehälteraufnahme beispielsweise einen Korb ausbilden.

Vorzugsweise weisen die Haltestrukturen jeweils eine Durchgangsöffnung auf. Ein Probenbehälter kann somit einfach durch die Durchgangsöffnung geführt und gehalten werden. Die Durchgangsöffnung ist hierfür vorzugsweise etwas größer ausgebildet als der durch die jeweilige Durchgangsöffnung aufgenommene Probenbehälter.

Jede der Haltestrukturen kann zumindest teilweise in dem Auflagebereich des Bodens der Probebehälteraufnahme ausgebildet sein. Dies bedeutet insbesondere, dass der Auflagebereich nicht flach oder plan, sondern beispielsweise strukturiert ausgebildet ist, um eine entsprechende Haltefunktion, beispielsweise entlang einer Richtung quer zur Rotationsachse, bereitzustellen.

Folglich kann vorgesehen sein, dass jede der Haltestrukturen einerseits zum Teil in dem Halteelement und andererseits zum Teil in dem Auflagebereich ausgebildet ist. Durch eine derartige Ausbildung ergibt sich eine besonders gute Halterung der Probenbehälter.

Die Haltestrukturen weisen vorzugsweise jeweils eine Aussparung auf, wobei die so gebildeten Aussparungen vorzugsweise den Auflagebereich des Bodens bilden. Dadurch können die Probenbehälter besonders gut aufliegen und gehalten werden. Die Aussparungen können jeweils wenigstens teilweise korrespondierend oder komplementär zum Boden des Probenbehälters ausgebildet sein. Beispielsweise ist es denkbar, dass jede der Aussparungen wenigstens teilweise konkav ausgebildet ist.

Die wenigstens eine Durchgangsöffnung kann in die Aussparungen münden. Bevorzugt ist, wenn bei mehreren Durchgangsöffnungen jede Durchgangsöffnung in eine jeweilige Aussparung mündet. Es kann jedoch auch vorgesehen sein, dass eine Durchgangsöffnung in mehrere Aussparungen oder eine einzige Durchgangsöffnung in eine der Aussparungen mündet.

Durch derartiges Vorsehen der wenigstens einen Durchgangsöffnung relativ zu den Aussparungen wird bewirkt, dass, wenn das Auflageelement die Probenbehälteraufnahme aufnimmt, jeder Vorsprung sich durch die wenigstens eine Durchgangsöffnung (also beispielsweise durch eine jeweilige oder eigene Durchgangsöffnung) und in wenigstens eine (jeweilige) Aussparung erstreckt, um wenigstens einen Probenbehälter anzuheben. Der wenigstens eine Probenbehälter wird dann relativ zu der jeweiligen Aussparung angehoben, ist dann also von dieser beabstandet.

Bevorzugt ist, wenn die wenigstens eine Durchgangsöffnung und der wenigstens eine Vorsprung derart ausgebildet und angeordnet sind, dass, wenn der wenigstens eine Vorsprung sich durch die wenigstens eine Durchgangsöffnung erstreckt und von dem Auflagebereich zum Anheben eines oder mehrerer Probenbehälter hervorsteht, die Probenbehälteraufnahme relativ zum Auflageelement und um die Rotationsachse herum in eine definierte Orientierung überführt ist. In diesem Zustand ist dann eine Drehung der Probenbehälteraufnahme um ihre Rotationsachse durch den wenigstens einen Vorsprung, der in die wenigstens eine Durchgangsöffnung eingeführt ist, vorzugsweise arretiert oder nur noch in einem definierten (kleinen) Bereich (bspw. Toleranzbereich) möglich. Dadurch wird bewirkt, dass die Probenbehälteraufnahme relativ zum Auflageelement und um die Rotationsachse herum in der definierten Orientierung bleibt.

Die definierte Orientierung kann dabei helfen, die einzelnen in der Probenbehälteraufnahme gehaltenen Probenbehälter zu handhaben. Beispielsweise kann durch die definierte Orientierung sichergestellt werden, dass die Probenbehälter in einer bestimmten Abfolge oder nur bestimmte Probenbehälter gehandhabt werden. Somit ist die Handhabung der Probenbehälter vereinfacht. Dies auch insbesondere deshalb, da ein Bediener nicht selber die definierte Orientierung der Probenbehälteraufnahme relativ zum Auflageelement finden musst. Vielmehr wird die definierte Orientierung allein durch Anordnung und Ausbildung des wenigstens einen Vorsprungs und der wenigstens einen Durchgangsöffnung bewirkt.

Die wenigstens eine Durchgangsöffnung kann eine einzelne Durchgangsöffnung sein oder je gedachtem Ring nur eine einzelne Durchgangsöffnung aufweisen, sodass, wenn der wenigstens eine Vorsprung sich durch die einzelne Durchgangsöffnung erstreckt, die Probenbehälteraufnahme in die definierte Orientierung überführt ist.

Der wenigstens eine Vorsprung kann einen Vorsprung aufweisen, der einzig in eine Durchgangsöffnung der wenigstens einen Durchgangsöffnung zum Anheben eines Probenbehälters einführbar ist, sodass, wenn eingeführt, die Probenbehälteraufnahme in die definierte Orientierung überführt ist. Bevorzugt ist, wenn der eine Vorsprung deshalb einzig in die eine Durchgangsöffnung einführbar ist, weil nur diese Durchgangsöffnung eine Breite wie beispielsweise einen Durchmesser aufweist, die größer ist als die Breite oder der Durchmesser des einen Vorsprungs. Der eine Vorsprung ist vorzugsweise der erste Vorsprung, und die eine Durchgangsöffnung ist vorzugsweise die erste Durchgangsöffnung. Vorzugsweise ist der eine Vorsprung in eine andere Durchgangsöffnung der wenigstens einen Durchgangsöffnung nicht einführbar. Der eine Vorsprung ist in die andere Durchgangsöffnung vorzugsweise deshalb nicht einführbar, weil der eine Vorsprung eine Breite wie beispielsweise einen Durchmesser aufweist, der größer ist als die Breite oder der Durchmesser der anderen Durchgangsöffnung.

Das Auflageelement kann ein Identifikationselement aufweisen, wobei, wenn die Probenbehälteraufnahme mittels der wenigstens einen Durchgangsöffnung und mittels wenigstens einen Vorsprungs in die definierte Orientierung überführt ist, das Identifikationselement und eine dem Identifikationselement zugeordnete Haltestruktur entlang der Rotationsachse gesehen auf demselben Radius bezüglich der Rotationsachse vorgesehen sind. Somit ist das Identifikationselement einfach der entsprechenden Haltestruktur bzw. dem entsprechenden Probenbehälter (eindeutig) zugeordnet. Dadurch ergibt sich auf einfache Weise eine eindeutige (insbesondere visuell erkennbare) Zuordnung der einzelnen Behälter. Vorzugsweise ist die dem Identifikationselement zugeordnete Haltestruktur zur Halterung eines Probenbehälters vorgesehen, wobei das Identifikationselement Informationen hinsichtlich dieses Probenbehälters und/oder des Inhalts dieses Probenbehälters (also beispielsweise der Probe) aufweist.

Bevorzugt ist, wenn das Identifikationselement mit dem Auflageelement, beispielsweise mit dessen Seitenwand oder Boden, integral ausgebildet ist, vorzugsweise durch eine Gravur, d.h. Eingravierung. So ist das Identifikationselement bevorzugt unlösbar vorgesehen.

Vorzugsweise weist das Identifikationselement eine Nummerierung (beispielsweise als Codierung) und/oder einen Barcode (1-dimensional, 2-dimensional, QR-Code etc.) auf. Die Nummerierung ist dabei vorzugsweise einem bestimmten Probenbehälter zuordenbar.

Die Probenbehälteraufnahme kann eine vorzugsweise stabförmige Handhabungsstruktur zur Handhabung der Probenbehälteraufnahme aufweisen, wobei die Handhabungsstruktur sich vorzugsweise von dem Boden der Probenbehälteraufnahme und wenigstens teilweise parallel zur Rotationsachse erstreckt und/oder vorzugsweise wenigstens teilweise deckungsgleich mit dieser ist. Über die Handhabungsstrukturen kann die Probenbehälteraufnahme beispielsweise aus der Reaktionskammer eines Druckbehälters entnommen und anschließend in das Auflageelement gesetzt werden. Dies kann beispielsweise automatisch (vorzugsweise mit einem entsprechenden Greifmechanismus) und/oder händisch erfolgen.

Die Handhabungsstruktur weist vorzugsweise einen Befestigungsbereich wie beispielsweise einen Flanschbereich auf, wobei die Probenbehälteraufnahme über den Befestigungsbereich in einem Druckbehälter, beispielsweise in einer Reaktionskammer des Druckbehälters, vorzugsweise hängend befestigbar ist. Zum Beispiel kann die Probenbehälteraufnahme über die Handhabungsstruktur in dem Druckbehälter bzw. der Reaktionskammer eingehängt und somit befestigt sein.

Bevorzugt ist, wenn die Probenbehälteraufnahme über die Handhabungsstruktur, insbesondere über deren Befestigungsbereich, vorzugsweise automatisch in einen Druckbehälter, oder eine Reaktionskammer des Druckbehälters, einfahrbar und/oder aus diesen/dieser ausfahrbar ist.

Gemäß einem weiteren Aspekt betrifft die Erfindung ein System, aufweisend: ein Probenbehälterhandhabungssystem, wie oben beschrieben, und einen Druckbehälter mit einer Reaktionskammer als Druckraum zum Auslösen und/oder Fördern chemischer und/oder physikalischer Druckreaktionen von in der Reaktionskammer aufgenommenen Proben, wobei die Probenbehälteraufnahme des Probenbehälterhandhabungssystems in der Reaktionskammer aufnehmbar oder aufgenommen ist.

Die Probenbehälteraufnahme ist insbesondere derart ausgestaltet, dass diese den in der Reaktionskammer ausgelösten und/oder geförderten chemischen und/oder physikalischen Druckreaktionen standhalten kann.

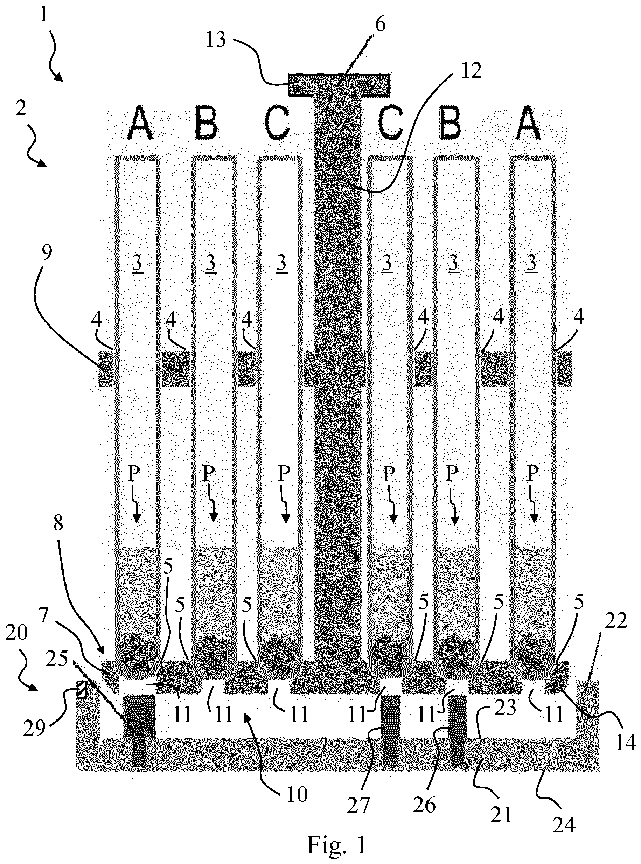

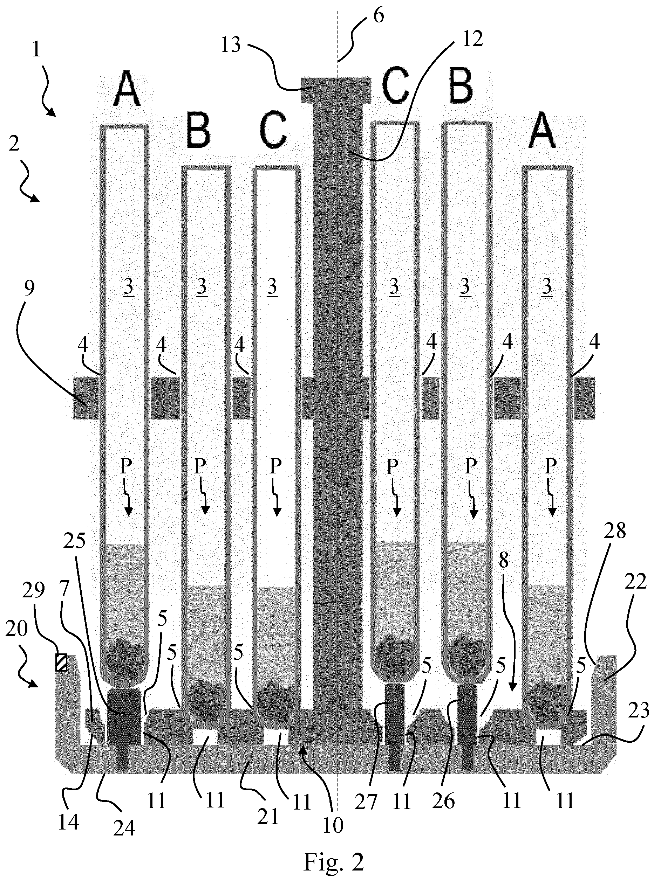

Nachfolgend wird die Erfindung anhand der Figuren, in denen zwei bevorzugte Ausführungsform der Erfindung dargestellt sind, beispielhaft beschrieben. In den Zeichnungen zeigen:
- Figur 1: eine schematische Schnittansicht einer ersten bevorzugten Ausführungsform des erfindungsgemäßen Probenbehälterhandhabungssystems, wobei das Auflageelement die Probenbehälteraufnahme nicht aufnimmt und dadurch kein Probenbehälter mittels des Auflageelements angehoben ist;
- Figur 2: eine schematische Schnittansicht der in Figur 1 gezeigten Ausführungsform, wobei das Auflageelement die Probenbehälteraufnahme aufnimmt und dadurch mehrere Probenbehälter angehoben sind; und
- Figur 3: eine schematische perspektivische Ansicht einer zweiten bevorzugten Ausführungsform des erfindungsgemäßen Probenbehälterhandhabungssystems, wobei das Auflageelement die Probenbehälteraufnahme aufnimmt und dadurch mehrere Probenbehälter angehoben sind.
eine erste Vorsprung sich durch die wenigstens eine erste Durchgangsöffnung zum Anheben wenigstens eines (ersten) Probenbehälters erstreckt und der wenigstens eine Figuren 1 und 2 zeigen ein Probenbehälterhandhabungssystem 1 gemäß einer ersten bevorzugten Ausführungsform. Das Probenbehälterhandhabungssystem 1 weist eine Probenbehälteraufnahme 2 zur Aufnahme mehrerer Probenbehälter 3 auf. Die Probenbehälter 3 sind jeweils ausgebildet, um eine Probe P aufzunehmen oder zu beinhalten. Die Probe P kann eine Chemikalie wie beispielsweise eine Säure aufweisen. Jeder der Probenbehälter 3 kann länglich ausgebildet sein und/oder ein Reagenzglas sein.

Die Probenbehälteraufnahme 2 weist mehrere Haltestrukturen 4, 5 auf, die jeweils zur Halterung eines jeweiligen Probenbehälters 3 ausgebildet sind. Die Haltestrukturen 4, 5 sind um eine Rotationsachse 6 herum angeordnet. In der in Figuren 1 und 2 dargestellten Ausführungsform weisen die Haltestrukturen 4, 5 drei Gruppen an Haltestrukturen 4, 5 auf, nämlich erste Haltestrukturen 4, 5, die auf einem ersten gedachten, um die Rotationsachse 6 verlaufenden (äußeren) Ring A angeordnet sind, zweite Haltestrukturen 4, 5, die auf einem zweiten gedachten, um die Rotationsachse 6 verlaufenden (mittleren) Ring B angeordnet sind, und dritte Haltestrukturen 4, 5, die auf einem dritten gedachten, um die Rotationsachse 6 verlaufenden (inneren) Ring C angeordnet sind. Die gedachten Ringe A, B, C haben damit ein gemeinsames Zentrum, nämlich die Rotationsachse 6. Die Ringe A, B, C sind kreisförmig ausgebildet, wobei der Radius des dritten gedachten Rings C kleiner ist als der des zweiten gedachten Rings B, und der Radius des zweiten gedachten Rings B ist kleiner als der des ersten gedachten Rings A. In anderen Ausführungsformen können die Ringe A, B, C jeweils auch eine andere Form wie beispielsweise eine elliptische, mehreckige, rechteckige oder quadratische Form aufweisen. Mit den Haltestrukturen 4, 5 können die Probenbehälter 3 also in Ringanordnung entsprechend den gedachten Ringen A, B, C angeordnet werden. Dadurch können die Probenbehälter 3 sehr dicht beieinander angeordnet werden. In anderen Ausführungsform ist auch denkbar, dass die Haltestrukturen 4, 5 nur gemäß einem oder zweien der gedachten Ringe A, B, C angeordnet sind.

Die Probenbehälteraufnahme 2 weist ferner einen Boden 7 auf. Der Boden 7 weist wiederum einen Auflagebereich 8 auf, auf dem die über die Haltestrukturen 4, 5 gehaltenen Probenbehälter 3 aufliegen können. Auf dem Auflagebereich 8 liegt also jeder der Probenbehälter 3 mit seinem jeweiligen Boden, der beispielsweise wenigstens teilweise konvex ausgebildet ist, auf. Jede der Haltestrukturen 4, 5 kann beispielsweise als eine Aussparung ausgebildet sein, die den jeweiligen Probenbehälter 3, insbesondere dessen Boden, aufnehmen kann. Der Halteteil 5 einer jeden Haltestruktur ist vorzugsweise ausgebildet, eine Bewegung des jeweiligen Probenbehälters 3 in einer Richtung quer oder senkrecht zur Rotationsachse 6 zu verhindern, aber beispielsweise eine Bewegung in einer Richtung weg von dem Halteteil 5 und parallel zur Rotationsachse 6 zuzulassen. Der Halteteil 5, ausgebildet in dem Boden 7, kann nicht nur zur Halterung, sondern auch zur Auflage des jeweiligen Probenbehälters 3 dienen. Die Halteteile 5 der Haltestrukturen 4, 5 können somit den Auflagebereich 8 des Bodens 7 bilden.

Die Erfindung ist jedoch nicht darauf beschränkt, dass jede der Haltestrukturen 4, 5 über den jeweiligen Halteteil 5 zumindest teilweise in dem Auflagebereich 8 des Bodens 7 ausgebildet ist. In anderen Ausführungsformen kann auch vorgesehen sein, dass die Haltestrukturen jeweils nicht in dem Auflagebereich 8 ausgebildet sind. Der Auflagebereich 8 dient dann ausschließlich zur Auflage und damit nicht zur (weiteren) Halterung des jeweiligen Probenbehälters 3. Zum Beispiel kann dann vorgesehen sein, dass der Auflagebereich 8 plan oder flach ausgebildet ist, sich also beispielsweise in nur einer Ebene erstreckt.

Die Probenbehälteraufnahme 2 kann ferner ein von dem Boden 7 beabstandetes oder entferntes Halteelement 9 aufweisen, in dem jede der Haltestrukturen 4, 5 zumindest teilweise ausgebildet ist. Unter Bezugnahme auf die Figuren 1 und 2 bedeutet dies, dass jede der Haltestrukturen 4, 5 einen jeweiligen Halteteil 4 aufweist, der in dem Halteelement 9 ausgebildet ist. Der Halteteil 4 einer jeden Haltestruktur ist vorzugsweise ausgebildet, eine Bewegung des jeweiligen Probenbehälters 3 in einer Richtung quer oder senkrecht zur Rotationsachse 6 zu verhindern, aber beispielsweise eine Bewegung in einer Richtung weg von dem Boden 7 und parallel zur Rotationsachse 6 zuzulassen. Wie die Figuren 1 und 2 erkennen lassen, kann jeder Halteteil 4 beispielsweise als eine Durchgangsöffnung ausgebildet sein, durch die der jeweilige Probenbehälter 3 durchführbar und damit gehalten ist. Die Durchgangsöffnungen 4 erstrecken sich bevorzugt entlang der Vertikalen und/oder parallel zur Rotationsachse 6. Ein Probenbehälter 3 kann also durch eine jeweilige Durchgangsöffnung 4 durchgeführt oder in diese eingesetzt werden, um anschließend auf dem Auflagebereich 8 aufzuliegen und bevorzugt von dem Halteteil 5 gehalten zu werden. Jede der Haltestrukturen 4, 5 ist vorzugsweise ausgebildet, über ihren jeweiligen Halteteil 4 und/oder ihren jeweiligen Halteteil 5 einen Probenbehälter 3 im Wesentlichen parallel zur Rotationsachse 6 zu halten.

Das Halteelement 9 ist nicht auf eine bestimmte Ausgestaltung beschränkt. Wie in den Figuren 1 und 2 dargestellt, kann das Halteelement 9 beispielsweise scheibenförmig ausgebildet sein. Das Halteelement 9 weist vorzugsweise eine dem Auflagebereich 8 zugewandte Seite und eine dem Auflagebereich 8 abgewandte Seite auf, wobei die Durchgangsöffnungen 4 sich jeweils vorzugsweise von der ersteren Seite zu der letzteren Seite erstrecken. Das Halteelement 9 kann beispielsweise eine durch die mehreren Durchgangsöffnungen 4 gebildete Lochscheibe sein.

Der Boden 7 weist ferner eine dem Auflagebereich 8 abgewandte Seite 10 auf. Zudem weist der Boden 7 mehrere Durchgangsöffnungen 11 auf, die sich jeweils von der Seite 10 zu dem Auflagebereich 8 erstrecken. In den Figuren 1 und 2 dargestellten Ausführungsform sind die Durchgangsöffnungen 11 entsprechend den gedachten Ringen A, B, C angeordnet. Das heißt, dass in einer Draufsicht des Systems 1 gesehen die Haltestrukturen 4, 5 wenigstens teilweise deckungsgleich mit den Durchgangsöffnungen 11 sind. Mit anderen Worten ist jede Durchgangsöffnung 11 vorzugsweise fluchtend mit einer jeweiligen Haltestruktur 4, 5, also beispielsweise einem jeweiligen Halteteil 4 und/oder Halteteil 5, angeordnet. Bevorzugt ist, wenn je Haltestruktur 4, 5 eine jeweilige Durchgangsöffnung 11 vorgesehen ist. Es kann jedoch auch vorgesehen sein, dass je Gruppe von Haltestrukturen 4, 5 eine jeweilige Durchgangsöffnung 11 vorgesehen ist. Jede der Durchgangsöffnungen 11 erstreckt sich derart, dass über die jeweilige Durchgangsöffnung 11 ein Zugriff auf einen entsprechenden, auf dem Auflagebereich 8 aufliegenden Probenbehälter 3 erfolgen kann. So kann beispielsweise vorgesehen sein, dass jede Durchgangsöffnung 11 in eine jeweilige oder entsprechende Aussparung 5 mündet oder öffnet.

Die Durchgangsöffnungen 11 weisen in der in den Figuren 1 und 2 dargestellten Ausführungsform drei (Gruppen an) Durchgangsöffnungen 11 auf, nämlich eine oder mehrere erste Durchgangsöffnungen 11, die entsprechend dem ersten gedachten Ring A angeordnet sind, eine oder mehrere zweite Durchgangsöffnungen 11, die entsprechend dem zweiten gedachten Ring B angeordnet sind, und eine oder mehrere dritte Durchgangsöffnungen 11, die entsprechend dem dritten gedachten Ring C angeordnet sind. In anderen Ausführungsformen kann jedoch auch vorgesehen sein, dass die Durchgangsöffnungen 11 nur gemäß dem ersten gedachten Ring A und/oder zweiten gedachten Ring B angeordnet sind.

Die Probenbehälteraufnahme 2 kann ferner eine vorzugsweise stabförmige Handhabungsstruktur 12 (zum Beispiel in Form einer Führungsstange) aufweisen, über die die Probenbehälteraufnahme 2 gehandhabt werden kann, beispielsweise um zumindest teilweise in dem Auflagebereich 8 des Bodens 7 ausgebildet sein. Dies bedeutet, dass jede der Haltestrukturen 4, 5 einen jeweiligen Halteteil 5 aufweist, der in dem Auflagebereich 8 des Bodens 7 ausgebildet ist. Der Halteteil 5 kann diese in einen Druckbehälter oder eine Reaktionskammer des Druckbehälters einzusetzen oder von dort zu entnehmen. Wie in den Figuren 1 und 2 dargestellt, kann die Handhabungsstruktur 12 sich beispielsweise parallel zur Rotationsachse 6 erstrecken und/oder deckungsgleich mit der Rotationsachse 6 sein. Das heißt, dass durch Rotation der Handhabungsstruktur 12 um ihre Achse die Probenbehälteraufnahme 2 um die Rotationsachse 6 gedreht werden kann. Die Handhabungsstruktur 12 weist vorzugsweise einen Befestigungsbereich 13 (beispielsweise in Form eines Flanschbereichs) auf, über den die Probenbehälteraufnahme 2 in einem Druckbehälter oder eine Reaktionskammer des Druckbehälters befestigt werden kann, beispielsweise über eine Einhängung. Das Halteelement 9 ist bevorzugt von der Handhabungsstruktur 12 gehalten oder an diese befestigt. Wenn ein oder mehrere Probenbehälter 3 über die Haltestrukturen 4, 5 gehalten sind, erstrecken sich diese bevorzugt parallel zur Handhabungsstruktur 12.

Das Probenbehälterhandhabungssystem 1 weist ferner ein Auflageelement 20 auf, dass mit dem Boden 7 der Probenbehälteraufnahme 2 verbindbar ist, um die Probenbehälteraufnahme 2 aufzunehmen. Zur sicheren Aufnahme der Probenbehälteraufnahme 2 durch das Auflageelement 20 kann dieses schalenförmige ausgebildet, d.h. beispielsweise ein Schalenelement sein. Bevorzugt ist, wenn das Auflageelement 20 eine dem Boden 7 zumindest teilweise korrespondierende oder komplementäre Form aufweist. Wie die Figuren 1 und 2 erkennen lassen, kann das Auflageelement 20 einen Boden 21 und wenigstens eine Seitenwand 22 aufweisen, die sich von dem Boden 21 weg erstreckt. Der Boden 21 ist so ausgebildet, dass der Boden 7 der Probenbehälteraufnahme 2 mit seiner Seite 10 auf dem Boden 21 aufliegen kann. Der Boden 21 weist hierfür bevorzugt eine Vorder- oder Auflageseite 23 auf, auf der die Seite 10 aufliegen kann. Der Boden 21 weist ferner eine der Auflageseite 23 abgewandte Rückseite 24 auf, über die der Boden 21 und somit das Auflageelement 20 auf einer Oberfläche, zum Beispiel von einem Tisch, aufliegen oder an diese befestigt werden kann.

Das Auflageelement 20 weist mehrere Vorsprünge 25, 26, 27 auf, die jeweils vorgesehen sind, um einen Probenbehälter 3 anzuheben. In anderen Ausführungsformen kann das Auflageelement 20 auch mehr oder weniger Vorsprünge aufweisen, zum Beispiel lediglich einen Vorsprung. Dieser kann dann zum Anheben eines oder mehrerer Probenbehälter 3 vorgesehen sein. Jeder Vorsprung ist ausgebildet, einen einzelnen Probenbehälter 3 oder mehrere Probenbehälter 3 anzuheben. In der in den Figuren 1 und 2 dargestellten Ausführungsform ist ein erster Vorsprung 25 vorgesehen, um einen gemäß dem ersten gedachten Ring A angeordneten Probenbehälter 3 anzuheben. Ferner weisen die Vorsprünge in dieser Ausführungsform auf: einen zweiten Vorsprung 26 zum Anheben eines gemäß dem zweiten gedachten Ring B angeordneten Probenbehälters 3 und einen dritten Vorsprung 27 zum Anheben eines gemäß dem dritten gedachten Ring C angeordneten Probenbehälters 3.

Die Vorsprünge 25, 26, 27 können lösbar vorgesehen sein. Dies kann beispielsweise erfolgen, indem einer oder mehrere der Vorsprünge 25, 26, 27 in den Boden 21 eingesteckt und/oder eingeschraubt sind. In anderen Ausführungsformen können die Vorsprünge 25, 26, 27 integral mit dem Boden 21 ausgebildet ist. Die Vorsprünge 25, 26, 27 sind jeweils nicht auf eine bestimmte Ausbildung beschränkt. Bevorzugt ist, wenn die Vorsprünge 25, 26, 27 jeweils als Säule und/oder im Querschnitt kreisförmig ausgebildet sind, also beispielsweise die Form eines Zylinders aufweisen. Die Vorsprünge 25, 26, 27 können bezüglich einer Zentralachse des Auflageelements 20 auf demselben Durchmesser oder auf unterschiedlichen Durchmessern angeordnet sein. Bevorzugt ist, wenn, in einem Querschnitt gesehen, die Zentralachse des Auflageelements 20 zwischen dem Vorsprung 25 einerseits und den Vorsprüngen 26, 27 andererseits vorgesehen ist. Zum Beispiel können die Vorsprünge 25, 26, 27 asymmetrisch bezüglich der Zentralachse des Auflageelements 20 vorgesehen sein. Bevorzugt ist, wenn die Zentralachse des Auflageelements 20 zu der Rotationsachse 6 der Probenbehälteraufnahme 2 parallel ist (und vorzugsweise mit der Rotationsachse 6 deckungsgleich ist), wenn die Probenbehälteraufnahme 2 durch das Auflageelement 20 aufgenommen ist.

In Figur 1 ist ein Zustand des Probenbehälterhandhabungssystem 1 dargestellt, in dem die Probenbehälteraufnahme 2 noch nicht durch das Auflageelement 20 aufgenommen ist. Der Boden 7 der Probenbehälteraufnahme 2 ist von dem Boden 21 bzw. dessen Seite 23 beabstandet, und zwar derart, dass durch die Vorsprünge 25, 26, 27 keines der Probenbehälter 3 angehoben ist. Insbesondere sind die Vorsprünge 25, 26, 27 in die Durchgangsöffnungen 11 nicht eingeführt. Jeder der Probenbehälter 3 liegt also mit seinem jeweiligen unteren Ende auf dem Auflagebereich 8 auf. Dadurch sind die Öffnungen oder oberen Enden der Probenbehälter 3 im Wesentlichen in einer gemeinsamen Ebene angeordnet. In diesem Zustand ist es schwierig, einen oder mehrere der Probenbehälter 3 aus der Probenbehälteraufnahme 2 zu entnehmen. Dies insbesondere deshalb, da durch die dicht beieinanderliegende Anordnung der Probenbehälter 3 in der Probenbehälteraufnahme 2 kein ausreichender Freiraum besteht, über den zumindest einer der Probenbehälter 3 gegriffen und daraufhin aus der jeweiligen Haltestruktur 4, 5 entnommen werden kann.

Zur einfachen Entnahme eines oder mehrerer der Probenbehälter 3 aus der Probenbehälteraufnahme 2 wird das Probenbehälterhandhabungssystem 1 deshalb in den in Figur 2 dargestellten Zustand überführt. Die Probenbehälteraufnahme 2 wird dabei auf das Auflageelement 20 zubewegt, um von diesem aufgenommen zu werden. Dabei durchtritt jeder der Vorsprünge 25, 26, 27 eine jeweilige Durchgangsöffnung 11, wodurch auf jedem der gedachten Ringe A, B, C zumindest ein Probenbehälter 3 angehoben wird. In dem gemäß Figur 2 gezeigten Zustand, in dem das Auflageelement 20 die Probenbehälteraufnahme 2 aufnimmt, erstreckt sich damit jeder der Vorsprünge 25, 26, 27 durch die jeweilige Durchgangsöffnung 11 hindurch und steht dadurch von dem Auflagebereich 8 hervor. Durch dieses Hervorstehen (d.h. Hervorragen) kann der jeweilige Probenbehälter 3 nicht mehr auf dem Auflagebereich 8 aufliegen. Durch das Hervorstehen wird vielmehr bewirkt, dass der jeweilige Probenbehälter 3 relativ zu dem Auflagebereich 8 bewegt und damit von diesem weg bewegt wird. Dabei bewegt sich der jeweilige Probenbehälter 3 durch die jeweilige Durchgangsöffnung 4 und parallel zur Rotationsachse 6. Der so angehobene Probenbehälter 3 steht somit von der Ebene hervor, in der zuvor die Öffnungen oder oberen Enden der Probenbehälter 3 vorgesehen waren. Anders gesagt wird neben dem oberen Ende des jeweils angehobenen Probenbehälters 3, das die Öffnung aufweist und/oder von dem Boden 8 abgewandt ist, ein Freiraum geschaffen, in den sich ein benachbarter Probenbehälter 3 nicht hinein erstreckt. Über diesen Freiraum kann der jeweils angehobene Probenbehälter 3 einfach griffen und aus der Probenbehälteraufnahme 2 entnommen werden. Und dies insbesondere ohne dass ein nur kleiner Spalt zwischen benachbarten Probenbehälter 3, wie in Figur 1 dargestellt, genutzt werden muss.

Zum Beispiel kann vorgesehen sein, dass je gedachtem Ring A, B, C nur ein Probenbehälter 3 gegenüber benachbarten Probenbehälter 3 angehoben ist. Dies ist bereits für eine einfache Handhabung der Probenbehälter 3 ausreichend. Denn sobald der jeweils angehobene Probenbehälter 3 aus der Probenbehälteraufnahme 2 entnommen wurde, ist durch den Platz, der durch Entnahme des angehobenen Probenbehälters 3 geschaffen ist, ein weiterer Freiraum bereitgestellt, über den die zu dem angehobenen (und bereits entnommenen) Probenbehälter 3 benachbarten Probenbehälter 3 nacheinander aus der Probenbehälteraufnahme 2 entnommen werden können.

Wie in Figur 2 dargestellt, ist es bevorzugt, wenn in dem Zustand, wenn das Auflageelement 20 die Probenbehälteraufnahme 2 aufnimmt, diese mit ihrer Seite 10 auf dem Boden 21 des Auflageelements 20 aufliegt. Dabei ist die wenigstens eine Seitenwand 22 dann so vorgesehen, dass diese den Boden 7 zumindest teilweise umgibt. Die Seitenwand 22 kann dabei insbesondere derart vorgesehen sein, dass die Probenbehälteraufnahme 2, insbesondere deren Durchgangsöffnungen 11, relativ zu den Vorsprüngen 25, 26, 27 definiert ausgerichtet ist. Dies hilft vor allem einem Bediener des Probenbehälterhandhabungssystems 1, die Vorsprünge 25, 26, 27 in die entsprechenden Durchgangsöffnungen 11 einzuführen. Auch kann die Seitenwand 22 bewirken, dass die Probenbehälteraufnahme 2 relativ zu dem Auflageelement 20 zentriert ist. Zum besonders vorteilhaften, also insbesondere einfachen Ausrichten der Probenbehälteraufnahme 2 relativ zum Auflageelement 20 kann der Boden 7 der Probenbehälteraufnahme 2 eine Anlaufschräge 14 aufweisen. Die Anlaufschräge 14 ist dabei so vorgesehen, dass beim Verbinden der Probenbehälteraufnahme 2 mit dem Auflageelement 20 die Anlaufschräge 14 an den Boden 20 wie beispielsweise dessen Seitenwand 22 stoßen kann und dadurch die Probenbehälteraufnahme 2 in Richtung der Zentralachse des Auflageelements 20 getrieben wird. In einer solchen (zentrierten) Position kann es dann ausreichend sein, wenn die Probenbehälteraufnahme 2 um ihre Rotationsachse 6 gedreht und/oder entlang der Rotationsachse 6 (beispielsweise durch Schwerkraft) bewegt wird, um die Vorsprünge 25, 26, 27 in die entsprechenden Durchgangsöffnungen 11 einzuführen. Folglich ergibt sich eine besonders einfache Handhabung. Alternativ oder zusätzlich kann das Auflageelement 20, beispielsweise dessen Seitenwand 22, eine Anlaufschräge 28 aufweisen. Die Anlaufschräge 28 ist dann so vorgesehen, dass diese beim Verbinden der Probenbehälteraufnahme 2 mit dem Auflageelement 20 an die Probenbehälteraufnahme 2, beispielsweise an deren Boden 7 oder Anlaufschräge 14, stoßen kann, wodurch die Probenbehälteraufnahme 2 in Richtung der Zentralachse des Auflageelements 20 getrieben wird.

Bevorzugt ist, wenn über die Vorsprünge 25, 26, 27 und die Durchgangsöffnungen 11 die Probenbehälteraufnahme 2 relativ zu dem Auflageelement 20 und um die Rotationsachse 6 herum in eine definierte Orientierung überführt werden kann. Wie in den Figuren 1 und 2 erkennbar, kann dies beispielsweise erfolgen, indem der Vorsprung 25 in Bezug auf die Durchgangsöffnungen 11 entsprechend angeordnet und/oder ausgebildet ist. Dies erfolgt bevorzugt derart, dass der Vorsprung 25 einzig in eine bestimmte Durchgangsöffnung 11, beispielsweise einzig in eine der gemäß dem ersten gedachten Ring A vorgesehenen Durchgangsöffnungen 11, einführbar ist. Der Vorsprung 25 ist demnach in andere Durchgangsöffnungen 11, beispielsweise in die übrigen gemäß dem ersten gedachten Ring A vorgesehenen Durchgangsöffnungen 11 und/oder jene gemäß den gedachten Ringen B, C vorgesehenen Durchgangsöffnungen 11, nicht einführbar, beispielsweise wegen einer größeren und/oder anderen Form. Bevorzugt ist, wenn die bestimmte Durchgangsöffnung 11 eine derartige Größe oder Breite hat, dass nur in diese Durchgangsöffnung 11 der Vorsprung 25 einführbar ist. Der Zustand, in dem die Vorsprünge 25, 26, 27 jeweils in einer passenden Durchgangsöffnung 11 vorgesehen sind, ist gegeben, sobald einer oder mehrere der Probenbehälter 3 angehoben sind, wie beispielsweise Figur 2 dargestellt. Damit kann der Zustand, in dem die definierte Orientierung gegeben ist, einfach erkannt werden. In diesem Zustand ist dann nämlich zumindest ein Probenbehälter 3 angehoben.

Bevorzugt ist, wenn das Auflageelement 20 ein Identifikationselement 29 wie beispielsweise eine Nummerierung und/oder einen Barcode aufweist. Das Identifikationselement 29 kann auf der Seitenwand 22 vorgesehen sein. In anderen Ausführungsformen kann das Identifikationselement 29 auch auf dem Boden 21, beispielsweise auf einem Randbereich des Bodens 21, vorgesehen sein. Das Identifikationselement 29 ist einer oder mehreren Haltestrukturen 4, 5 und/oder einem oder mehreren Probenbehältern 3, die auf demselben Radius bezüglich der Rotationsachse 6 vorgesehen sind, zuordenbar. Dabei ist das Identifikationselement 29 auf dem Auflageelement 20 so vorgesehen, dass, wenn die Probenbehälteraufnahme 2 mittels der Durchgangsöffnungen 11 und der Vorsprünge 25, 26, 27 wie oben beschrieben in die definierte Orientierung überführt ist, das Identifikationselement 29 (in Draufsicht, also in Richtung der Rotationsachse 6 gesehen) auf demselben Radius wie die dem Identifikationselement 29 zugeordneten Haltestruktur(en) bzw. Probenbehälter(n) vorgesehen ist. Somit kann ein Bediener des Probenbehälterhandhabungssystems 1 einfach erkennen, dass das Identifikationselement 29 genau diesen Haltestruktur(en) und/oder Probenbehälter(n) zugeordnet ist. Beispielsweise beinhaltet das Identifikationselement 29 Informationen hinsichtlich des entsprechende Probenbehälters 3 und/oder des Inhalts dieses Probenbehälters 3.

Das Identifikationselement 29 kann beispielsweise integral mit einem Teil des Auflageelements 20 (beispielsweise dem Boden 21 und/oder der Seitenwand 22) ausgebildet sein. Eine solche integrale Ausbildung kann zum Beispiel durch eine Gravur erfolgen. In anderen Ausführungsformen kann das Identifikationselement 29 durch ein Befestigungsmittel (beispielsweise Stoffschluss, vorzugsweise in Form eines Klebstreifens) auf dem Auflageelement 20 vorgesehen sein

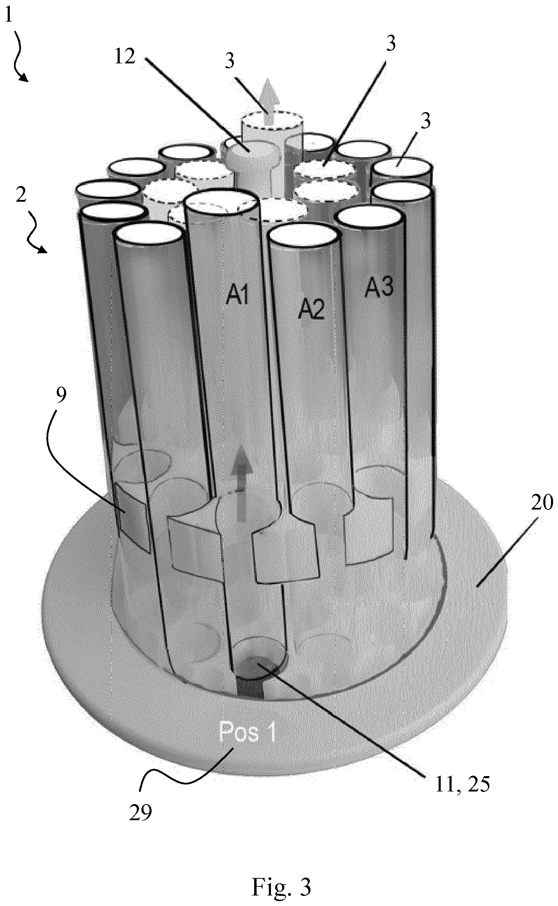

In der Figur 3 ist ein Probenbehälterhandhabungssystem 1 gemäß einer zweiten bevorzugten Ausführungsform beispielhaft dargestellt. Erkennbar ist, dass das Probenbehälterhandhabungssystem 1 gemäß der zweiten bevorzugten Ausführungsform sich von der ersten bevorzugten Ausführungsform lediglich dadurch unterscheidet, dass die dritten Haltestrukturen 4, 5, die entsprechend dem dritten gedachten Ring C angeordnet sind, nicht vorhanden sind. Entsprechend weist die Probenbehälteraufnahme 2 nicht die wenigstens eine dritte Durchgangsöffnung 11 auf, die für die Probenbehälter 3, angeordnet gemäß den dritten gedachten Ring C, vorgesehen ist. Folglich ist in dieser Ausführungsform auch der wenigstens eine dritte Vorsprung 27 des Auflageelements 20 nicht erforderlich und damit nicht vorgesehen. Ansonsten entspricht die zweite bevorzugte Ausführungsform im Wesentlichen der ersten bevorzugten Ausführungsform, sodass das hinsichtlich der ersten bevorzugten Ausführungsform Beschriebene entsprechend für die zweite bevorzugte Ausführungsform gilt.

Die Erfindung ist dabei nicht auf die zuvor beschriebenen Merkmale beschränkt. Insbesondere lassen sich alle zuvor beschriebenen Merkmale in beliebiger Weise miteinander kombinieren.

## Patentansprüche

1. Probenbehälterhandhabungssystem (1), aufweisend:
eine Probenbehälteraufnahme (2), aufweisend:
Haltestrukturen (4, 5), die jeweils zur Halterung eines jeweiligen Probenbehälters (3) ausgebildet sind und die um eine Rotationsachse (6) herum angeordnet sind, und
einen Boden (7) mit einem Auflagebereich (8) zur Auflage der über die Haltestrukturen (4, 5) gehaltenen Probenbehälter (3), wobei der Boden (7) ferner eine dem Auflagebereich (8) abgewandte Seite (10) und wenigstens eine Durchgangsöffnung (11) aufweist, die sich von dieser Seite (10) zu dem Auflagebereich (8) erstreckt; und
ein Auflageelement (20), das mit dem Boden (7) der Probenbehälteraufnahme (2) verbindbar ist, um diese aufzunehmen, wobei das Auflageelement (20) wenigstens einen Vorsprung (25, 26, 27) aufweist, der, wenn das Auflageelement (20) die Probenbehälteraufnahme (2) aufnimmt, sich durch die wenigstens eine Durchgangsöffnung (11) erstreckt und von dem Auflagebereich (8) zum Anheben eines oder mehrerer Probenbehälter (3) hervorsteht,
wobei die Probenbehälteraufnahme (2) eine definierte Anzahl an Haltestrukturen (4, 5) zur Halterung einer entsprechenden Anzahl an Probenbehältern (3) aufweist, wobei der wenigstens eine Vorsprung (25, 26, 27) geeignet ist, in dem Zustand, wenn das Auflageelement (20) die Probenbehälteraufnahme (2) aufnimmt, nur eine Anzahl an Probenbehältern (3) anzuheben, die kleiner ist als die definierte Anzahl an Haltestrukturen (4, 5), sodass wenigstens ein Probenbehälter (3) relativ zu seinem benachbarten Probenbehälter (3) angehoben ist.

2. Probenbehälterhandhabungssystem (1) nach Anspruch 1, wobei die Haltestrukturen (4, 5) aufweisen: erste Haltestrukturen (4, 5), die auf einem ersten gedachten, um die Rotationsachse (6) verlaufenden Ring (A) angeordnet sind, und zweite Haltestrukturen (4, 5), die auf einem zweiten gedachten, um die Rotationsachse (6) verlaufenden Ring (B) angeordnet sind, wobei die gedachten Ringe (A, B) jeweils vorzugsweise kreisförmig sind und der Radius des zweiten gedachten Rings (B) vorzugsweise kleiner ist als der des ersten gedachten Rings (A).

3. Probenbehälterhandhabungssystem (1) nach Anspruch 2, wobei die wenigstens eine Durchgangsöffnung (11) aufweist: wenigstens eine erste, dem ersten gedachten Ring (A) entsprechend angeordnete und/oder ausgebildete Durchgangsöffnung (11) und wenigstens eine zweite, dem zweiten gedachten Ring (B) entsprechend angeordnete und/oder ausgebildete Durchgangsöffnung (11).

4. Probenbehälterhandhabungssystem (1) nach Anspruch 3,
wobei der wenigstens eine Vorsprung (25, 26, 27) aufweist: wenigstens einen ersten Vorsprung (25) und wenigstens einen zweiten Vorsprung (26), die derart angeordnet sind, dass, wenn das Auflageelement (20) die Probenbehälteraufnahme (2) aufnimmt, der wenigstens eine erste Vorsprung (25) sich durch die wenigstens eine erste Durchgangsöffnung (11) zum Anheben wenigstens eines Probenbehälters (3) erstreckt und der wenigstens eine zweite Vorsprung (26) sich durch die wenigstens eine zweite Durchgangsöffnung (11) zum Anheben wenigstens eines Probenbehälters (3) erstreckt.

5. Probenbehälterhandhabungssystem (1) nach Anspruch 3 oder 4,
wobei die wenigstens eine erste Durchgangsöffnung (11)
• mehrere erste Durchgangsöffnungen (11) aufweist, die entsprechend dem ersten gedachten Ring (A) angeordnet und/oder ausgebildet sind, oder
• eine einzelne erste Durchgangsöffnung (11) ist, die entsprechend dem ersten gedachten Ring (A) angeordnet und/oder ausgebildet ist,
und/oder
wobei die wenigstens eine zweite Durchgangsöffnung (11)
• mehrere zweite Durchgangsöffnungen (11) aufweist, die entsprechend dem zweiten gedachten Ring (B) angeordnet und/oder ausgebildet sind, oder
• eine einzelne zweite Durchgangsöffnung (11) ist, die entsprechend dem zweiten gedachten Ring (B) angeordnet und/oder ausgebildet ist.

6. Probenbehälterhandhabungssystem (1) nach einem der Ansprüche 1 bis 2, wobei die wenigstens eine Durchgangsöffnung eine einzelne Durchgangsöffnung ist, und wobei der wenigstens eine Vorsprung ein einzelner Vorsprung ist, der derart angeordnet ist, dass, wenn das Auflageelement (20) die Probenbehälteraufnahme (2) aufnimmt, der Vorsprung sich durch die Durchgangsöffnung zum Anheben eines oder mehrerer Probenbehälter erstreckt.

7. Probenbehälterhandhabungssystem (1) nach einem der vorhergehenden Ansprüche, wobei das Auflageelement (20) aufweist: einen Boden (21), von dem sich der wenigstens eine Vorsprung (25, 26, 27) erstreckt, und wenigstens eine Seitenwand (22), die sich von dem Boden (21) erstreckt, wobei, wenn das Auflageelement (20) die Probenbehälteraufnahme (2) aufnimmt, diese mit ihrer dem Auflagebereich (8) abgewandten Seite (10) auf dem Boden (21) des Auflageelements (20) aufliegt und die wenigstens eine Seitenwand (22) den Boden (7) der Probenbehälteraufnahme (2) zumindest teilweise umgibt, vorzugsweise derart, dass die Probenbehälteraufnahme (2) relativ zu dem wenigstens einen Vorsprung (25, 26, 27) definiert ausgerichtet und/oder relativ zu dem Auflageelement (20) zentriert ist,
und/oder
wobei der Boden (7) der Probenbehälteraufnahme (2) eine Anlaufschräge (14) zum Zusammenwirken mit dem Auflageelement (20), vorzugsweise mit dessen Seitenwand (22), und somit Ausrichten der Probenbehälteraufnahme (2) relativ zum Auflageelement (20) aufweist,
und/oder
wobei das Auflageelement (20), vorzugsweise dessen Seitenwand (22), eine Anlaufschräge (28) zum Zusammenwirken mit dem Boden (7) der Probenbehälteraufnahme (2) und somit Ausrichten der Probenbehälteraufnahme (2) relativ zum Auflageelement (20) aufweist.

8. Probenbehälterhandhabungssystem (1) nach einem der vorhergehenden Ansprüche, wobei der wenigstens eine Vorsprung (25, 26, 27) lösbar vorgesehen ist, beispielsweise in den Boden (21) des Auflageelements (20) eingesteckt und/oder eingeschraubt ist oder
Probenbehälterhandhabungssystem (1) nach einem der vorhergehenden Ansprüche, wobei der wenigstens eine Vorsprung (25, 26, 27) unlösbar vorgesehen ist, beispielsweise integral mit dem Boden (21) des Auflageelements (20) ausgebildet ist.

9. Probenbehälterhandhabungssystem (1) nach einem der vorhergehenden Ansprüche, wobei die Probenbehälteraufnahme (2) ein von deren Boden (7) beabstandetes Halteelement (9) aufweist, wobei jede der Haltestrukturen (4, 5) zumindest teilweise in dem Halteelement (9) ausgebildet ist.

10. Probenbehälterhandhabungssystem (1) nach einem der vorhergehenden Ansprüche, wobei die Haltestrukturen (4, 5) jeweils eine Durchgangsöffnung (4) aufweisen, und/oder
wobei jede der Haltestrukturen (4, 5) zumindest teilweise in dem Auflagebereich (8) des Bodens (7) der Probebehälteraufnahme (2) ausgebildet ist.

11. Probenbehälterhandhabungssystem (1) nach einem der vorhergehenden Ansprüche, wobei die Haltestrukturen (4, 5) jeweils eine Aussparung (5) aufweisen, und wobei die Aussparungen (5) vorzugsweise den Auflagebereich (8) des Bodens (7) bilden,
wobei vorzugsweise die wenigstens eine Durchgangsöffnung (11) in die Aussparungen (5) mündet, sodass, wenn das Auflageelement (20) die Probenbehälteraufnahme (2) aufnimmt, der wenigstens eine Vorsprung (25, 26, 27) sich durch die wenigstens eine Durchgangsöffnung (11) und in wenigstens eine entsprechende Aussparung (5) zum Anheben wenigstens eines Probenbehälters (3) erstreckt.

12. Probenbehälterhandhabungssystem (1) nach einem der vorhergehenden Ansprüche, wobei die wenigstens eine Durchgangsöffnung (11) und der wenigstens eine Vorsprung (25, 26, 27) derart ausgebildet und angeordnet sind, dass, wenn der wenigstens eine Vorsprung (25, 26, 27) sich durch die wenigstens eine Durchgangsöffnung (11) erstreckt und von dem Auflagebereich (8) zum Anheben eines oder mehrerer Probenbehälter (3) hervorsteht, die Probenbehälteraufnahme (2) relativ zum Auflageelement (20) und um die Rotationsachse (6) herum in eine definierte Orientierung überführt ist wobei vorzugsweise die wenigstens eine Durchgangsöffnung (11) eine einzelne Durchgangsöffnung ist oder je gedachtem Ring (A, B, C) nur eine einzelne Durchgangsöffnung (11) aufweist, sodass, wenn der wenigstens eine Vorsprung (25, 26, 27) sich durch die einzelne Durchgangsöffnung oder die einzelnen Durchgangsöffnungen (11) erstreckt, die Probenbehälteraufnahme (2) in die definierte Orientierung überführt ist,
wobei vorzugsweise der wenigstens eine Vorsprung (25, 26, 27) einen Vorsprung (25) aufweist, der einzig in eine Durchgangsöffnung (11) der wenigstens einen Durchgangsöffnung (11) zum Anheben eines Probenbehälters (3) einführbar ist, sodass, wenn eingeführt, die Probenbehälteraufnahme (2) in die definierte Orientierung überführt ist, wobei der eine Vorsprung (25) besonders vorzugsweise der erste Vorsprung (25) ist, und wobei die eine Durchgangsöffnung (11) besonders vorzugsweise die erste Durchgangsöffnung (11) ist.

13. Probenbehälterhandhabungssystem (1) nach Anspruch 12, wobei das Auflageelement (20) ein Identifikationselement (29) aufweist, wobei, wenn die Probenbehälteraufnahme (2) in die definierte Orientierung überführt ist, das Identifikationselement (29) und eine dem Identifikationselement (29) zugeordnete Haltestruktur (4, 5) entlang der Rotationsachse (6) gesehen auf demselben Radius bezüglich der Rotationsachse (6) vorgesehen sind, wobei vorzugsweise die dem Identifikationselement (29) zugeordnete Haltestruktur (4, 5) zur Halterung eines Probenbehälters (3) vorgesehen ist und das Identifikationselement (29) Informationen hinsichtlich dieses Probenbehälters (3) und/oder des Inhalts (P) dieses Probenbehälters (3) aufweist,
wobei vorzugsweise das Identifikationselement (29) mit dem Auflageelement (20), beispielsweise mit dessen Boden (21) oder Seitenwand (22), integral ausgebildet ist, beispielsweise durch eine Gravur,
wobei vorzugsweise das Identifikationselement (29) eine Nummerierung und/oder einen Barcode aufweist.

14. Probenbehälterhandhabungssystem (1) nach einem der vorhergehenden Ansprüche, wobei die Probenbehälteraufnahme (2) eine vorzugsweise stabförmige Handhabungsstruktur (12) zur Handhabung der Probenbehälteraufnahme (2) aufweist, wobei die Handhabungsstruktur (12) sich vorzugsweise von dem Boden (7) der Probenbehälteraufnahme (2) und wenigstens teilweise parallel zur Rotationsachse (6) erstreckt und/oder vorzugsweise wenigstens teilweise deckungsgleich mit dieser ist,
wobei vorzugsweise die Handhabungsstruktur (12) einen Befestigungsbereich (13) wie beispielsweise einen Flanschbereich aufweist, wobei die Probenbehälteraufnahme (2) über den Befestigungsbereich (13) in einem Druckbehälter vorzugsweise hängend befestigbar ist.

15. System, aufweisend:
ein Probenbehälterhandhabungssystem (1) nach einem der vorhergehenden Ansprüche, und
einen Druckbehälter mit einer Reaktionskammer als Druckraum zum Auslösen und/oder Fördern chemischer und/oder physikalischer Druckreaktionen von in der Reaktionskammer aufgenommenen Proben,
wobei die Probenbehälteraufnahme (2) des Probenbehälterhandhabungssystems (1) in der Reaktionskammer aufnehmbar oder aufgenommen ist.

## Claims

1. Sample container handling system (1), comprising:
a sample container receptacle (2) comprising:
holding structures (4, 5), which are each configured to hold a respective sample container (3) and are arranged around a rotational axis (6), and
a base (7) comprising a support region (8) for supporting the sample containers (3) held by the holding structures (4, 5), wherein the base (7) further comprises a side (10) facing away from the support region (8) and at least one through-opening (11), which extends from this side (10) to the support region (8); and
a support element (20), which can be connected to the base (7) of the sample container receptacle (2) in order to receive it, wherein the support element (20) comprises at least one projection (25, 26, 27) which, when the support element (20) receives the sample container receptacle (2), extends through the at least one through-opening (11) and protrudes from the support region (8) to elevate one or more sample containers (3),
wherein the sample container receptacle (2) comprises a defined number of holding structures (4, 5) for holding a corresponding number of sample containers (3), wherein the at least one projection (25, 26, 27) is suitable, in the state in which the support element (20) receives the sample container receptacle (2), for elevating only a number of sample containers (3) that is less than the defined number of holding structures (4, 5) such that at least one sample container (3) is elevated relative to its adjacent sample container (3).

2. Sample container handling system (1) according to claim 1, wherein the holding structures (4, 5) comprise: first holding structures (4, 5), which are arranged on a first imaginary ring (A) extending around the rotational axis (6), and second holding structures (4, 5), which are arranged on a second imaginary ring (B) extending around the rotational axis (6), wherein the imaginary rings (A, B) are each preferably circular and the radius of the second imaginary ring (B) is preferably smaller than that of the first imaginary ring (A).

3. Sample container handling system (1) according to claim 2, wherein the at least one through-opening (11) comprises: at least one first through-opening (11) arranged and/or formed in accordance with the first imaginary ring (A) and at least one second through-opening (11) arranged and/or formed in accordance with the second imaginary ring (B).

4. Sample container handling system (1) according to claim 3,
wherein the at least one projection (25, 26, 27) comprises: at least one first projection (25) and at least one second projection (26), which are arranged such that, when the support element (20) receives the sample container receptacle (2), the at least one first projection (25) extends through the at least one first through-opening (11) to elevate at least one sample container (3) and the at least one second projection (26) extends through the at least one second through-opening (11) to elevate at least one sample container (3).

5. Sample container handling system (1) according to claim 3 or 4,
wherein the at least one first through-opening (11)
• comprises a plurality of first through-openings (11), which are arranged and/or formed in accordance with the first imaginary ring (A), or
• is a single first through-opening (11), which is arranged and/or formed in accordance with the first imaginary ring (A),
and/or
wherein the at least one second through-opening (11)
• comprises a plurality of second through-openings (11), which are arranged and/or formed in accordance with the second imaginary ring (B), or
• is a single second through-opening (11), which is arranged and/or formed in accordance with the second imaginary ring (B).

6. Sample container handling system (1) according to any one of claims 1 to 2, wherein the at least one through-opening is a single through-opening, and wherein the at least one projection is a single projection which is arranged such that, when the support element (20) receives the sample container receptacle (2), the projection extends through the through-opening to elevate one or more sample containers.

7. Sample container handling system (1) according to any one of the preceding claims, wherein the support element (20) comprises: a base (21), from which the at least one projection (25, 26, 27) extends, and at least one side wall (22), which extends from the base (21), wherein, when the support element (20) receives the sample container receptacle (2), said receptacle rests on the base (21) of the support element (20) on its side (10) facing away from the support region (8) and the at least one side wall (22) surrounds the base (7) of the sample container receptacle (2) at least in part, preferably such that the sample container receptacle (2) is oriented relative to the at least one projection (25, 26, 27) in a defined manner and/or is centred relative to the support element (20),
and/or
wherein the base (7) of the sample container receptacle (2) comprises a run-in bevel (14) for interacting with the support element (20), preferably with its side wall (22), and thus for orienting the sample container receptacle (2) relative to the support element (20),
and/or
wherein the support element (20), preferably its side wall (22), comprises a run-in bevel (28) for interacting with the base (7) of the sample container receptacle (2), and thus for orienting the sample container receptacle (2) relative to the support element (20).

8. Sample container handling system (1) according to any one of the preceding claims, wherein the at least one projection (25, 26, 27) is provided in a detachable manner, for example inserted and/or screwed into the base (21) of the support element (20), or
sample container handling system (1) according to any one of the preceding claims, wherein the at least one projection (25, 26, 27) is provided in a non-detachable manner, for example is formed integrally with the base (21) of the support element (20).

9. Sample container handling system (1) according to any one of the preceding claims, wherein the sample container receptacle (2) comprises a holding element (9) that is spaced apart from the base (7) of said receptacle, wherein each of the holding structures (4, 5) is formed in the holding element (9) at least in part.

10. Sample container handling system (1) according to any one of the preceding claims, wherein the holding structures (4, 5) each comprise a through-opening (4), and/or
wherein each of the holding structures (4, 5) is formed in the support region (8) of the base (7) of the sample container receptacle (2) at least in part.

11. Sample container handling system (1) according to any one of the preceding claims, wherein the holding structures (4, 5) each comprise a cut-out (5), and wherein the cut-outs (5) preferably form the support region (8) of the base (7), wherein the at least one through-opening (11) preferably opens into the cut-outs (5) such that, when the support element (20) receives the sample container receptacle (2), the at least one projection (25, 26, 27) extends through the at least one through-opening (11) and into at least one corresponding cut-out (5) to elevate at least one sample container (3).

12. Sample container handling system (1) according to any one of the preceding claims, wherein the at least one through-opening (11) and the at least one projection (25, 26, 27) are formed and arranged such that, when the at least one projection (25, 26, 27) extends through the at least one through-opening (11) and protrudes from the support region (8) to elevate one or more sample containers (3), the sample container receptacle (2) is transferred into a defined orientation relative to the support element (20) and about a rotational axis (6), wherein the at least one through-opening (11) is preferably a single through-opening or comprises just one single through-opening (11) per imaginary ring (A, B, C), such that, when the at least one projection (25, 26, 27) extends through the single through-opening or the single through-openings (11), the sample container receptacle (2) is transferred into the defined orientation, wherein the at least one projection (25, 26, 27) preferably comprises a projection (25) which can be inserted only into one through-opening (11) of the at least one through-opening (11) to elevate a sample container (3) such that, when inserted, the sample container receptacle (2) is transferred into the defined orientation, wherein this one projection (25) is particularly preferably the first projection (25), and wherein this one through-opening (11) is particularly preferably the first through-opening (11).

13. Sample container handling system (1) according to claim 12, wherein the support element (20) comprises an identification element (29), wherein, when the sample container receptacle (2) is transferred into the defined orientation, the identification element (29) and a holding structure (4, 5) assigned to the identification element (29) are provided on the same radius relative to the rotational axis (6) when viewed along the rotational axis (6), wherein the holding structure (4, 5) assigned to the identification element (29) is preferably provided for holding a sample container (3) and the identification element (29) comprises information regarding this sample container (3) and/or the contents (P) of this sample container (3),
wherein the identification element (29) is preferably integrally formed with the support element (20), for example with its base (21) or side wall (22), for example by an engraving,
wherein the identification element (29) preferably comprises numbering and/or a barcode.

14. Sample container handling system (1) according to any one of the preceding claims, wherein the sample container receptacle (2) comprises a preferably rod-shaped handling structure (12) for handling the sample container receptacle (2), wherein the handling structure (12) preferably extends from the base (7) of the sample container receptacle (2) and at least partially in parallel with the rotational axis (6) and/or preferably at least partially congruently therewith,
wherein the handling structure (12) preferably comprises a fastening region (13), such as a flange region, wherein the sample container receptacle (2) can preferably be fastened in a pressure container so as to be suspended by means of the fastening region (13).

15. System, comprising:
a sample container handling system (1) according to any one of the preceding claims, and
a pressure container comprising a reaction chamber in the form of a pressure space for initiating and/or facilitating chemical and/or physical pressure reactions of samples received in the reaction chamber,
wherein the sample container receptacle (2) of the sample container handling system (1) is or can be received in the reaction chamber.

## Revendications

1. Système de manipulation de contenant à échantillons (1) présentant :
un logement de contenant à échantillons (2) présentant :
des structures de maintien (4, 5), qui sont réalisées respectivement pour maintenir un contenant à échantillons (3) respectif et qui sont disposées tout autour d'un axe de rotation (6), et
un fond (7) avec une zone de réception (8) destinée à réceptionner les contenants à échantillons (3) maintenus par l'intermédiaire des structures de maintien (4, 5), dans lequel le fond (7) présente en outre un côté (10) opposé à la zone de réception (8) et au moins une ouverture de passage (11), qui s'étend depuis ce côté (10) vers la zone de réception (8) ; et
un élément de réception (20), qui peut être relié au fond (7) du logement de contenant à échantillons (2) pour recevoir celui-ci, dans lequel l'élément de réception (20) présente au moins une partie faisant saillie (25, 26, 27), qui, lorsque l'élément de réception (20) loge le logement de contenant à échantillons (2), s'étend à travers l'au moins une ouverture de passage (11) et fait saillie de la zone de réception (8) pour soulever un ou plusieurs contenants à échantillons (3),
dans lequel le logement de contenant à échantillons (2) présente un nombre défini de structures de maintien (4, 5) destinées à maintenir un nombre correspondant de contenants à échantillons (3), dans lequel l'au moins une partie faisant saillie (25, 26, 27) est adaptée pour ne soulever, dans l'état dans lequel l'élément de réception (20) loge le logement de contenant à échantillons (2), qu'un nombre de contenants à échantillons (3), qui est inférieur au nombre défini de structures de maintien (4, 5) de sorte qu'au moins un contenant à échantillons (3) est soulevé par rapport à son contenant à échantillons (3) adjacent.

2. Système de manipulation de contenant à échantillons (1) selon la revendication 1, dans lequel les structures de maintien (4, 5) présentent : des premières structures de maintien (4, 5), qui sont disposées sur un premier anneau imaginaire (A) s'étendant autour de l'axe de rotation (6), et des deuxièmes structures de maintien (4, 5), qui sont disposées sur un deuxième anneau imaginaire (B) s'étendant autour de l'axe de rotation (6), dans lequel les anneaux imaginaires (A, B) sont respectivement de préférence circulaires et le rayon du deuxième anneau imaginaire (B) est de préférence inférieur à celui du premier anneau imaginaire (A).

3. Système de manipulation de contenant à échantillons (1) selon la revendication 2, dans lequel l'au moins une ouverture de passage (11) présente : au moins une première ouverture de passage (11) disposée et/ou réalisée de manière à correspondre au premier anneau imaginaire (A) et au moins une deuxième ouverture de passage (11) disposée et/ou réalisée de manière à correspondre au deuxième anneau imaginaire (B).

4. Système de manipulation de contenant à échantillons (1) selon la revendication 3, dans lequel l'au moins une partie faisant saillie (25, 26, 27) présente : au moins une première partie faisant saillie (25) et au moins une deuxième partie faisant saillie (26), qui sont disposées de telle manière que, lorsque l'élément de réception (20) loge le logement de contenant à échantillons (2), l'au moins une première partie faisant saillie (25) s'étend à travers l'au moins une première ouverture de passage (11) pour soulever au moins un contenant à échantillons (3) et l'au moins une deuxième partie faisant saillie (26) s'étend à travers l'au moins une deuxième ouverture de passage (11) pour soulever au moins un contenant à échantillons (3).

5. Système de manipulation de contenant à échantillons (1) selon la revendication 3 ou 4,
dans lequel l'au moins une première ouverture de passage (11)
- présente plusieurs premières ouvertures de passage (11), qui sont disposées et/ou réalisées de manière à correspondre au premier anneau imaginaire (A), ou
- est une première ouverture de passage individuelle (11), qui est disposée et/ou réalisée de manière à correspondre au premier anneau imaginaire (A),
et/ou
dans lequel l'au moins une deuxième ouverture de passage (11)
- présente plusieurs deuxièmes ouvertures de passage (11), qui sont disposées et/ou réalisées de manière à correspondre au deuxième anneau imaginaire (B),
ou
- est une deuxième ouverture de passage individuelle (11), qui est disposée et/ou réalisée de manière à correspondre au deuxième anneau imaginaire (B).

6. Système de manipulation de contenant à échantillons (1) selon l'une quelconque des revendications 1 à 2, dans lequel l'au moins une ouverture de passage est une ouverture de passage individuelle, et dans lequel l'au moins une partie faisant saillie est une partie faisant saillie individuelle, qui est disposée de telle manière que, lorsque l'élément de réception (20) loge le logement de contenant à échantillons (2), la partie faisant saillie s'étend à travers l'ouverture de passage pour soulever un ou plusieurs contenants à échantillons.

7. Système de manipulation de contenant à échantillons (1) selon l'une quelconque des revendications précédentes, dans lequel l'élément de réception (20) présente : un fond (21), depuis lequel l'au moins une partie faisant saillie (25, 26, 27) s'étend, et au moins une paroi latérale (22), qui s'étend depuis le fond (21), dans lequel, lorsque l'élément de réception (20) loge le logement de contenant à échantillons (2), celui-ci repose sur le fond (21) de l'élément de réception (20) par son côté (10) opposé à la zone de réception (8) et l'au moins une paroi latérale (22) entoure au moins en partie le fond (7) du logement de contenant à échantillons (2), de préférence de telle manière que le logement de contenant à échantillons (2) est orienté de manière définie par rapport à l'au moins une partie faisant saillie (25, 26 ; 27) et/ou est centré par rapport à l'élément de réception (20),
et/ou
dans lequel le fond (7) du logement de contenant à échantillons (2) présente un chanfrein de butée (14) destiné à coopérer avec l'élément de réception (20), de préférence avec sa paroi latérale (22), et destiné ainsi à orienter le logement de contenant à échantillons (2) par rapport à l'élément de réception (20),
et/ou
dans lequel l'élément de réception (20), de préférence sa paroi latérale (22), présente un chanfrein de butée (28) destiné à coopérer avec le fond (7) du logement de contenant à échantillons (2) et ainsi destiné à orienter le logement de contenant à échantillons (2) par rapport à l'élément de réception (20).

8. Système de manipulation de contenant à échantillons (1) selon l'une quelconque des revendications précédentes, dans lequel l'au moins une partie faisant saillie (25, 26, 27) est prévue de manière amovible, par exemple est enfichée et/ou est vissée dans le fond (21) de l'élément de réception (20), ou
système de manipulation de contenant à échantillons (1) selon l'une quelconque des revendications précédentes, dans lequel l'au moins une partie faisant saillie (25, 26, 27) est prévue de manière inamovible, par exemple est réalisée de manière intégrale avec le fond (21) de l'élément de réception (20).

9. Système de manipulation de contenant à échantillons (1) selon l'une quelconque des revendications précédentes, dans lequel le logement de contenant à échantillons (2) présente un élément de maintien (9) tenu à distance du fond (7) de celui-ci, dans lequel chacune des structures de maintien (4, 5) est réalisée au moins en partie dans l'élément de maintien (9).

10. Système de manipulation de contenant à échantillons (1) selon l'une quelconque des revendications précédentes, dans lequel les structures de maintien (4, 5) présentent respectivement une ouverture de passage (4), et/ou
dans lequel chacune des structures de maintien (4, 5) est réalisée au moins en partie dans la zone de réception (8) du fond (7) du logement de contenant à échantillons (2).

11. Système de manipulation de contenant à échantillons (1) selon l'une quelconque des revendications précédentes, dans lequel les structures de maintien (4, 5) présentent respectivement un évidement (5), et dans lequel les évidements (5) forment de préférence la zone de réception (8) du fond (7),
dans lequel de préférence l'au moins une ouverture de passage (11) débouche dans les évidements (5) si bien que, lorsque l'élément de réception (20) loge le logement de contenant à échantillons (2), l'au moins une partie faisant saillie (25, 26, 27) s'étend à travers l'au moins une ouverture de passage (11) et dans au moins un évidement (5) correspondant pour soulever au moins un contenant à échantillons (3).

12. Système de manipulation de contenant à échantillons (1) selon l'une quelconque des revendications précédentes, dans lequel l'au moins une ouverture de passage (11) et l'au moins une partie faisant saillie (25, 26, 27) sont réalisées et disposées de telle manière que, lorsque l'au moins une partie faisant saillie (25, 26, 27) s'étend à travers l'au moins une ouverture de passage (11) et fait saillie de la zone de réception (8) pour soulever un ou plusieurs contenants à échantillons (3), le logement de contenant à échantillons (2) est transféré dans une orientation définie par rapport à l'élément de réception (20) et tout autour de l'axe de rotation (6), dans lequel de préférence l'au moins une ouverture de passage (11) est une ouverture de passage individuelle ou présente par anneau imaginaire (A, B, C) seulement une ouverture de passage individuelle (11) si bien que, lorsque l'au moins une partie faisant saillie (25, 26, 27) s'étend à travers l'ouverture de passage individuelle ou les ouvertures de passages individuelles (11), le logement de contenant à échantillons (2) est transféré dans l'orientation définie,
dans lequel de préférence l'au moins une partie faisant saillie (25, 26, 27) présente une partie faisant saillie (25), qui peut être introduite individuellement dans une ouverture de passage (11) de l'au moins une ouverture de passage (11) pour soulever un contenant à échantillons (3) si bien que, lorsqu'elle est introduite, le logement de contenant à échantillons (2) est transféré dans l'orientation définie, dans lequel la partie faisant saillie (25) est en particulier de préférence la première partie faisant saillie (25), et dans lequel l'ouverture de passage (11) est en particulier de préférence la première ouverture de passage (11).

13. Système de manipulation de contenant à échantillons (1) selon la revendication 12, dans lequel l'élément de réception (20) présente un élément d'identification (29), dans lequel, lorsque le logement de contenant à échantillons (2) est transféré dans l'orientation définie, l'élément d'identification (29) et une structure de maintien (4, 5) associée à l'élément d'identification (29) sont prévus vus le long de l'axe de rotation (6) sur le même rayon en ce qui concerne l'axe de rotation (6), dans lequel de préférence la structure de maintien (4, 5) associée à l'élément d'identification (29) est prévue pour le maintien d'un contenant à échantillons (3), et l'élément d'identification (29) présente des informations en ce qui concerne ledit contenant à échantillons (3) et/ou le contenu (P) dudit contenant à échantillons (3),
dans lequel de préférence l'élément d'identification (29) est réalisé de manière intégrale avec l'élément de réception (20), par exemple avec son fond (21) ou sa paroi latérale (22), par exemple par une gravure,
dans lequel de préférence l'élément d'identification (29) présente une numérotation et/ou un code à barres.

14. Système de manipulation de contenant à échantillons (1) selon l'une quelconque des revendications précédentes, dans lequel le logement de contenant à échantillons (2) présente une structure de manipulation (12) de préférence en forme de barre destinée à manipuler le logement de contenant à échantillons (2), dans lequel la structure de manipulation (12) s'étend de préférence depuis le fond (7) du logement de contenant à échantillons (2) et au moins en partie de manière parallèle à l'axe de rotation (6) et/ou coïncide de préférence au moins en partie avec celui-ci,
dans lequel de préférence la structure de maintien (12) présente une zone de fixation (13) comme par exemple une zone de bride, dans lequel le logement de contenant à échantillons (2) peut être fixé de préférence de manière suspendue au-dessus de la zone de fixation (13) dans un contenant sous pression.

15. Système présentant :
un système de manipulation de contenant à échantillons (1) selon l'une quelconque des revendications précédentes, et
un contenant sous pression avec une chambre de réaction en tant qu'espace sous pression destiné à déclencher et/ou à favoriser des réactions sous pression chimiques et/ou physiques d'échantillons logés dans la chambre de réaction,
dans lequel le logement de contenant à échantillons (2) du système de manipulation de contenant à échantillons (1) peut être logé ou est logé dans la chambre de réaction.
